# FASCICULE DE BREVET EUROPEEN

(11) **EP 2 973 830 B1**
(45) Date de publication et mention de la délivrance du brevet: **10.05.2017**
(21) Numéro de dépôt: 14713267.4
(22) Date de dépôt: 10.03.2014
(51) Int. Cl.: H01M 10/04, H01M 10/0585, H01M 10/0525, H01M 2/08, H01M 4/485, H01M 4/58, H01M 4/66

(54) **BATTERIE LI-ION BIPOLAIRE A ETANCHEITE AMELIOREE ET PROCEDE DE REALISATION ASSOCIE**
BIPOLARE LI-IONENBATTERIE MIT VERBESSERTEM AUSLAUFSCHUTZ UND ZUGEHÖRIGES VERFAHREN ZUR HERSTELLUNG
BIPOLAR LI-ION BATTERY WITH IMPROVED LEAKTIGHTNESS AND ASSOCIATED METHOD OF PRODUCTION

(30) Priorité: 11.03.2013 FR 1352136
(43) Date de publication de la demande: 20.01.2016
(73) Titulaire: Commissariat à l'Énergie Atomique et aux Énergies Alternatives, 75015 Paris (FR)
(72) Inventeur: DAMLENCOURT, Jean-François, F-38190 Laval (FR); MOREAU, Gilles, F-38000 Grenoble (FR)
(74) Mandataire: Nony
(86) Numéro de dépôt international: PCT/IB2014/059579
(87) Numéro de publication internationale: WO 2014/141032

(56) Documents cités:
- WO-A1-2011/157751
- US-B2- 7 163 765
- US-B2- 7 320 846

## Description

### Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins un collecteur de courant à fonction bipolaire, aussi appelé batterie bipolaire. Dans une telle batterie bipolaire, le collecteur bipolaire aussi appelé électrode bipolaire, supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

L'invention vise à améliorer l'étanchéité des générateurs électrochimiques vis-à-vis de l'électrolyte, et en particulier à améliorer l'étanchéité d'une batterie bipolaire vis-à-vis de l'électrolyte sous forme liquide.

### Etat de la technique

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui-même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

Afin d'augmenter le potentiel moyen d'un accumulateur Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreux demandes de brevets ou brevets concernant de telles batteries bipolaires, tels que US 7279248, US 7220516, US 7320846, US 7163765, WO 03/047021, WO 2006/061696, US 7097937.

Les avantages subséquents d'une batterie bipolaire sont d'avoir une masse réduite et de ne pas comporter de volumes inutiles.

La principale difficulté de conception d'une batterie bipolaire est la réalisation de compartiments parfaitement étanches à l'électrolyte, en général sous forme liquide, les uns vis-à-vis des autres. En effet, une mauvaise étanchéité entraine un dysfonctionnement de la batterie bipolaire par court-circuits ioniques.

Cela est d'ailleurs corroboré par le fait que la majorité de la littérature brevets portant sur le domaine des batteries Li-ion bipolaires concerne des solutions d'étanchéité, aussi appelée scellement, pour éviter les fuites d'électrolyte d'un compartiment à l'autre (courts circuits ioniques). Quelle que soit la soit le système d'étanchéité retenu, il doit :
- être résistant chimiquement à l'électrolyte liquide, par exemple constitué d'une solution de sel de Lithium LiPF₆ dans un mélange de solvant carboné d'éthylène (EC), diméthyle carbonate (DMC) ;
- être facile à mettre en oeuvre : en effet, lors des opérations d'empilement des différents éléments constituants une batterie bipolaire, la mise en oeuvre de l'étanchéité doit pouvoir être compatible avec une ligne de fabrication industrielle et être réalisée à des relativement basses températures ne générant pas ou prou de dégradation des électrodes, du séparateur ou encore de l'électrolyte;
- assurer une étanchéité totale à long terme.

Parmi les demandes de brevet ou brevets déjà cités ci-dessus, on peut citer le brevet US 7220516 qui décrit une solution avec un film adhésif flexible 5, 6, collé sur la périphérie du collecteur bipolaire.

On peut également citer le brevet US 7320846 qui décrit une solution d'enrobage des collecteurs 4 et électrolytes 6 dans une résine 10.

On peut également citer le brevet US 7163765 qui décrit une solution d'étanchéité avec des entretoises 9 mixtes en polyamide/PP agencées entre collecteurs bipolaires le polyamide étant soudé directement à la périphérie des collecteurs à distance des cellules).

Le brevet US 7097937 propose quant à lui une solution d'étanchéité double puisqu'une barrière intérieure 14,22 en fluoropolymère est agencée sur la périphérie du collecteur bipolaire 11 et un cadre extérieur 18, 23 en élastomère est agencé à l'extérieur de la barrière 14, 22 sur et autour du collecteur bipolaire avec éventuellement l'agencement d'une bague supplémentaire 15 en élastomère sur le collecteur 11.

On peut citer encore la demande de brevet EP 2073300 au nom de la demanderesse qui propose une solution selon laquelle les dimensions des plaques sont augmentées l'une par rapport à l'autre adjacente et les joints d'étanchéité interposés entre les plaques interconnectrices sont décalés transversalement afin que deux joints ne se trouvent pas au droit l'un de l'autre selon l'axe d'empilement des cellules.

On peut citer enfin la demande WO2011/157751 qui décrit une solution d'intégration des moyens d'étanchéité à base de polymère à une grille ou feuille métallique à fonction de collecteur de courant.

Ainsi, on peut résumer de la manière suivante les solutions déjà envisagées pour améliorer l'étanchéité des compartiments entre eux vis-à-vis de l'électrolyte dans une batterie bipolaire Li-ion :
- réalisation systématique du collecteur de courant bipolaire aussi appelé électrode bipolaire sous la forme d'une plaque,
- utilisation de colles/polymère ou résines diverses à la périphérie de la plaque,
- augmentation du format de plaque de collecteur de courant bipolaire pour créer une barrière supplémentaire à l'électrolyte ;
- intégration des moyens d'étanchéité à base de polymère à une grille ou feuille métallique à fonction de collecteur de courant.

Toutes ces solutions d'étanchéité déjà envisagées ne sont pas pleinement satisfaisantes. En effet, elles utilisent toutes des polymères ou résines qui présentent une robustesse par rapport à l'électrolyte qui est faible lors du fonctionnement de la batterie bipolaire et dans la durée. De plus, la mise en oeuvre des solutions avec polymères est délicate car ces derniers ont tendance à fluer au-delà d'une certaine température qui n'est certes pas prévue d'être atteinte lors du fonctionnement de la batterie mais peut l'être en cas d'emballement. Enfin, le thermoscellage d'un polymère au niveau d'un compartiment prévu lors de la fabrication de la batterie bipolaire peut entrâiner une détérioration de l'étanchéité des compartiments électrochimiques déjà scellés du fait même du chauffage répété qui peut entraîner un fluage intempestif du polymère de ces derniers.

Le but général de l'invention est de proposer une autre solution que celles déjà envisagées pour améliorer l'étanchéité des compartiments entre eux vis-à-vis de l'électrolyte, en particulier de l'électrolyte liquide, dans une batterie bipolaire Li-ion, plus généralement dans un générateur électrochimique au lithium.

Un but particulier est de proposer une solution d'étanchéité d'une batterie bipolaire, plus généralement d'un générateur électrochimique au lithium, vis-à-vis de l'électrolyte, plus particulièrement d'un électrolyte liquide, qui soit robuste lors du fonctionnement et dans la durée et facile à mettre en oeuvre, de préférence à relativement basse température.

### Exposé de l'invention

Pour ce faire, l'invention a pour objet une batterie bipolaire, de type Li-ion, comprenant :
- au moins une première et deuxième cellules électrochimiques empilées l'une sur l'autre et comportant chacune une anode, une cathode et un électrolyte,
- au moins un collecteur de courant bipolaire dont une face est recouverte de l'anode en matériau d'insertion au lithium de la première cellule et la face opposée est recouverte de la cathode en matériau d'insertion au lithium de la deuxième cellule, le collecteur bipolaire comportant à sa périphérie, sur chacune de ses faces, au moins un cordon d'un matériau isolant électrique constituant une zone périphérique d'une paroi étanche à l'électrolyte de la première ou deuxième cellules, qui entoure celle-ci,

- au moins un premier collecteur de courant adjacent au collecteur bipolaire dont une face est recouverte de la cathode de la première cellule ; le premier collecteur adjacent comportant également à sa périphérie, au moins un cordon d'un matériau isolant électrique constituant également une zone périphérique d'une paroi étanche à l'électrolyte de la première cellule,
- au moins un deuxième collecteur de courant adjacent au collecteur bipolaire dont une face est recouverte de l'anode de la deuxième cellule; le deuxième collecteur adjacent comportant également à sa périphérie, au moins un cordon d'un matériau isolant électrique constituant également une zone périphérique de la paroi étanche à l'électrolyte de la deuxième cellule.

Selon l'invention, chaque paroi étanche est constituée d'au moins un cordon constitué d'une matrice en nid d'abeille, la matrice étant recouverte, sur chacune de ses deux faces principales d'une couche ou feuille en matériau thermoscellant et isolant électrique, chaque couche ou feuille étant thermoscellée à un des collecteurs de courant, le matériau thermoscellant et isolant électrique remplissant au moins en partie les alvéoles du nid d'abeille en reliant les deux couches ou feuilles entre elles.

La matrice en nid d'abeille est de préférence à base d'un matériau ne fluant pas dans les conditions de thermoscellage. De préférence la matrice est constituée d'un polymère, de préférence encore la matrice en nid d'abeille comprend un matériau choisi parmi le polyuréthane PU et le polytétrafluoroéthylène PTFE. De manière avantageuse, la matrice en nid d'abeille est en polyuréthane ou en polytétrafluoroéthylène.

Par « matériau thermoscellant », on entend ici et dans la cadre de l'invention, un matériau permettant le soudage de la structure en nid d'abeille au collecteur de courant, typiquement en aluminium, par action de la chaleur.

La solution d'étanchéité selon l'invention permet d'éviter de manière fiable les risques de fuite dans tous les compartiments d'une batterie bipolaire à la fois de l'intérieur vers l'extérieur de l'électrolyte et de l'extérieur vers l'intérieur de l'air ambiant.

Grâce à l'invention, on pallie aux solutions d'étanchéité à base de résine ou de polymère selon l'état de l'art.

En effet, tout d'abord, la structure de la matrice en nid d'abeille permet d'assurer initialement, i.e. avant le thermoscellage, et après celui-ci, une bonne tenue mécanique de chaque cordon dont la hauteur reste figée et détermine la hauteur unitaire d'un compartiment de la batterie. Ainsi, on évite les conséquences négatives du fluage des résines ou polymères selon l'état de l'art qui se traduisent par une étanchéité finale défectueuse et une hauteur finale de joint trop faible.

Puis, le thermoscellage définitif de la structure de matrice en nid d'abeille s'effectue par chauffage à une relativement basse température, typiquement inférieure ou égale à 200°C, de préférence à environ 80°C, durant environ de 10 à 100 secondes.

Une fois, le thermoscellage réalisé pour un compartiment électrochimique, il n'y a plus de risque de modification de la paroi étanche même en cas de chauffage des autres compartiments de la batterie ou d'échauffement de cette dernière, notamment lors des chauffages successif nécessaires pour le thermocollage des autres cordons d'étanchéité ou lorsqu'elle est susceptible de fonctionner en mode dégradé (température au-dessus de la température de fonctionnement nominale). Ainsi, pour un cordon d'étanchéité donné pour un compartiment de la batterie bipolaire, même si une partie de sa structure en nid d'abeille, c'est-à-dire une partie des alvéoles, venait à s'effondrer lors des chauffages successifs nécessaires aux thermoscellages des autres cordons d'étanchéité des autres compartiments de la batterie bipolaire, l'autre partie de la structure permet de conserver à coup sûr l'étanchéité.

En outre, du fait des structures de matrice en nid d'abeille des différents cordons d'étanchéité, on confère à une batterie bipolaire selon l'invention une certaine flexibilité. Le matériau PU ou PTFE de la matrice en nid d'abeille et celui de thermoscellage et isolant électrique des feuilles ou couches choisis présentent une résistance chimique à l'électrolyte élevée et une résistance à des températures de fonctionnement élevées.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi: oxyde de titane lithié ou non, par exemple Li₄Ti₅O₁₂ ou TiO₂. Plus particulièrement, le matériau d'électrode négative peut être choisi parmi les matériaux carbonés, les oxydes de titane non lithiès et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎Mₓ₁Ti₅O₁₂ et Li₄Ti(_{5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1})N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

Par « collecteur de courant adjacent au collecteur de courant bipolaire », on entend un collecteur qui est le plus proche du collecteur de courant bipolaire dans l'empilement et qui peut être aussi bien un autre collecteur de courant bipolaire qu'un collecteur de courant terminal de l'empilement.

De préférence, l'épaisseur de chaque cordon est sensiblement égale à l'épaisseur d'une cellule électrochimique.

De préférence encore, l'épaisseur de chaque cordon est comprise entre 100 et 200 µm, de préférence égale à 150 µm plus ou moins 5 µm.

De préférence encore, la largeur de chaque cordon est comprise entre 0,1 et 2 cm.

Selon un premier mode de réalisation avantageux, une partie des alvéoles de la matrice en nid d'abeille, qui sont les plus proches des cellules électrochimiques, étant remplies de sels ou composés mucilagineux adaptés pour réagir avec l'électrolyte.

Selon un deuxième mode de réalisation avantageux, une partie des alvéoles de la matrice en nid d'abeille, qui sont les plus éloignées des cellules électrochimiques, étant remplies de sels ou composés mucilagineux adaptés pour réagir avec l'humidité de l'air ambiant. Le premier et deuxième modes de réalisation peuvent être combinés, c'est-à-dire avec des sels ou composées mucilagineux remplissant des alvéoles à la fois proches de l'électrolyte lithié et de l'air ambiant, i.e. l'extérieur des cellules électrochimiques C1, C2. Ainsi, selon ces modes, lors d'amorce de fuites éventuelles soit de l'air ambiant vers l'intérieur de la batterie soit de l'électrolyte vers l'extérieur de la batterie, la réaction des sels ou la prise en masse des composés mucilagineux dans les alvéoles concernées va venir bloquer le parcours de fuite potentiel. Autrement dit, on s'assure ainsi à coup sûr d'une tenue d'étanchéité même en cas d'amorce de fuites vers ou depuis la batterie bipolaire selon l'invention.

Selon un mode de réalisation, la batterie bipolaire comprend un empilement de n cellules électrochimiques, avec un nombre de n-2 collecteurs de courant bipolaires, l'un des collecteurs adjacents étant un collecteur de courant terminal, l'autre des collecteurs adjacents étant l'autre collecteur de courant terminal.

Selon une variante de réalisation, toutes les anodes sont en Li₄Ti4₅O₁₂ et les cathodes en LiFePO₄.

L'invention a également pour objet, selon un autre de ses aspects un procédé de réalisation d'une batterie bipolaire comprenant au moins une première et deuxième cellules électrochimiques empilées l'une sur l'autre et comportant chacune une anode, une cathode et un électrolyte,
a/ réalisation d'un collecteur de courant bipolaire avec une face recouverte de l'anode en matériau d'insertion au lithium de la première cellule et la face opposée recouverte de la cathode en matériau d'insertion au lithium de la deuxième cellule ;
b/ réalisation d'un premier collecteur de courant, destiné à être adjacent au collecteur bipolaire dont une face est recouverte de la cathode de la première cellule ;
c/ réalisation d'un deuxième collecteur de courant, destiné à être adjacent au collecteur bipolaire dont une face est recouverte de l'anode de la deuxième cellule ;
d/ réalisation d'un premier cordon constitué d'une matrice en nid d'abeille, au moins une partie des alvéoles de la matrice étant remplie d'un matériau thermoscellant et isolant électrique qui en outre recouvre chacune de ses deux faces principales sous la forme d'une couche ou feuille ;
e/ mise en place du cordon à la périphérie de la face du deuxième collecteur recouverte de l'anode ;
f/ mise en place d'un premier séparateur sur l'anode du deuxième collecteur à l'intérieur du premier cordon ;
g/ empilement du collecteur de courant bipolaire de telle sorte que l'anode du deuxième collecteur adjacent soit en regard de la cathode du collecteur bipolaire en étant séparés du premier séparateur et que le premier cordon d'étanchéité soit en appui à la fois sur le deuxième collecteur et sur le collecteur bipolaire ;
h/ chauffage du premier cordon en contact à la périphérie des collecteurs de sorte à réaliser le thermoscellage de la matrice en nid d'abeille,
les étapes d/ à h/ étant réalisées au moins une fois avec un deuxième cordon d'étanchéité, un deuxième séparateur et le premier collecteur de courant.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF₆, LiClO₄, LiBF₄ et LiAsF₆.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

Le chauffage selon chaque étape f/ est de préférence réalisé à l'aide de mors chauffants en forme de U autour des parties périphériques des collecteurs déjà empilés.

Le chauffage selon chaque étape f/ est de préférence réalisé à une température inférieure à 200°C, typiquement à environ 80°C.

### Description détaillée

D'autres avantages et caractéristiques ressortiront mieux à la lecture de la description détaillée, faite à titre illustratif en référence aux figures suivantes parmi lesquelles:
- la figure 1 est une vue schématique en coupe longitudinale d'une batterie bipolaire au lithium selon l'état de l'art,
- les figures 2A et 2B sont respectivement des vues de face et en coupe d'un collecteur de courant bipolaire utilisé dans une batterie bipolaire au lithium selon l'état de l'art,
- les figures 3A et 3B sont respectivement des vues de face et en coupe d'un autre collecteur de courant bipolaire utilisé dans une batterie bipolaire au lithium selon l'état de l'art,
- la figure 4 est une vue schématique de côté d'une batterie bipolaire au lithium selon l'invention, la vue de côté permettant de visualiser des parois étanches réalisées selon l'invention,
- la figure 4A est une vue de détail de la figure 4 permettant de visualiser un cordon d'étanchéité selon un mode de réalisation de l'invention,
- la figure 5 est une vue de dessus d'un mode de réalisation de la structure à matrice en nid d'abeille d'un cordon d'étanchéité selon l'invention,
- la figure 5A est une vue de détail de la figure 5 permettant de visualiser la constitution des parois des alvéoles de matrice en nid d'abeille selon l'invention,
- les figures 6A à 6J sont des vues en coupe longitudinale montrant les différentes étapes de réalisation d'une batterie bipolaire au lithium selon l'invention,
- la figure 7 est une vue de dessus d'une variante de réalisation d'une structure à matrice en nid d'abeille d'un cordon d'étanchéité selon l'invention.

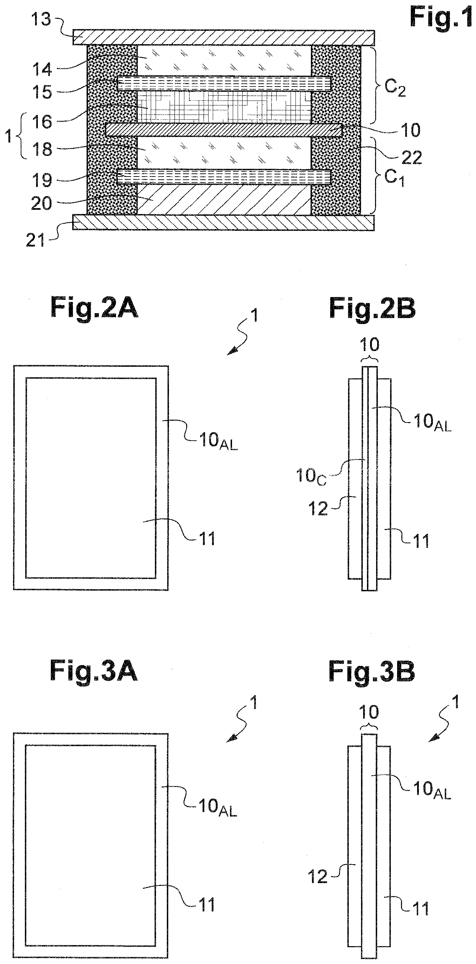

Par souci de clarté, les mêmes références désignant les mêmes éléments de batterie bipolaire selon l'état de l'art et selon l'invention sont utilisées pour toutes les figures 1 à 7.

On a représenté une batterie bipolaire Li-ion selon l'état de l'art en figure 1, telle qu'elle est illustrée dans la demande de brevet WO 03/047021. Cette batterie comporte en partie supérieure un substrat conducteur en aluminium 13 (collecteur de courant terminal positif) et une couche active 14 à base de matériau d'insertion au lithium positif, tel que du Li_{1.04}Mn_{1.96}O₄ et en partie inférieure un substrat conducteur en aluminium 21 (collecteur de courant terminal négatif) et une couche active 20 à base de matériau d'insertion au lithium positif, tel que du Li₄Ti₅O₁₂.

Au sein de cette batterie, une électrode bipolaire 1, aussi appelé collecteur de courant bipolaire, comprend une couche d'anode 16 et une couche de cathode 18 de part et d'autre d'un substrat conducteur en aluminium 10 sous la forme d'une plaque. Les électrodes inférieure 20 et supérieure 14 sont séparées de l'électrode bipolaire 1 par deux séparateurs 15, 19 dans lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 10.

Un collecteur de courant bipolaire 10 selon l'état de l'art est, en fonction des matériaux d'insertion aux ions lithium employés pour la réalisation des électrodes :
- soit constitué de deux plaques superposées, dont l'une typiquement en aluminium 10Al est recouverte par une cathode 11 et l'autre typiquement en cuivre 10C est recouverte par une anode 12 (figures 2A et 2B),
- soit constitué d'une seule plaque typiquement en aluminium 10Al recouverte sur une des faces par une cathode 11 et sur l'autre de ses faces par une anode 12 (figures 3A et 3B). La difficulté principale rencontrée dans la conception d'une batterie bipolaire selon l'état de l'art est la réalisation de compartiments parfaitement étanches à l'électrolyte, en général sous forme liquide, les uns vis-à-vis des autres, tel qu'entre les deux cellules C1 et C2, c'est-à-dire entre compartiments référencés 14, 15, 16 et 18, 19, 20 sur la figure 1.

La réalisation des joints 22 ou l'augmentation des plaques 10 de l'électrode bipolaire selon l'état de l'art pour y parvenir ne sont pas pleinement satisfaisants.

Aussi, les inventeurs proposent une nouvelle solution d'étanchéité d'une batterie bipolaire Li-ion vis-à-vis de l'électrolyte, plus particulièrement d'un électrolyte liquide, qui soit robuste lors du fonctionnement et dans la durée et facile à mettre en oeuvre, de préférence à relativement basse température.

Les inventeurs ont pensé à réaliser chaque paroi étanche avec un cordon dont la structure de matrice est en nid d'abeille à base de polyuréthane (PU) ou polytétrafluoroéthylène (PTFE), et les deux faces principales de la matrice recouvertes chacune d'une couche ou feuille en matériau à la fois isolant électrique et thermoscellant au matériau constitutif des collecteurs de courant. Pour assurer l'étanchéité complète sur la hauteur du nid d'abeille, le matériau thermo scellant remplit au moins en partie les alvéoles du nid d'abeille en reliant les deux couches ou feuilles opposées entre elles.

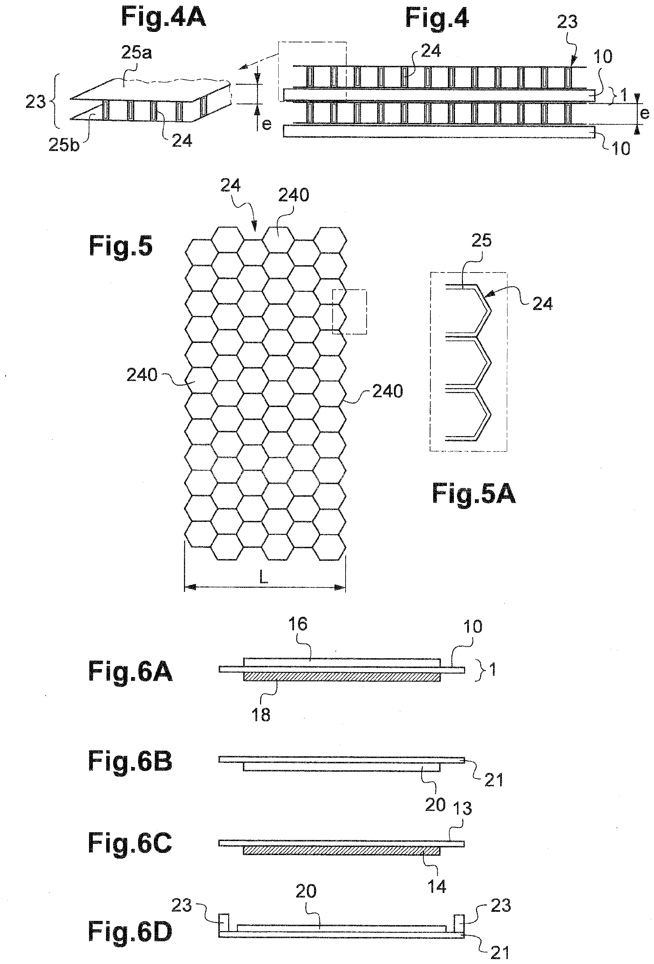

Les figures 4, 4A, 5 et 5A montrent la réalisation de cordons 23 d'étanchéité conformes à l'invention.

Un cordon 23 comporte une structure de matrice en nid d'abeille 24 en polyuréthane (PU) dont chacune des deux faces principales est recouverte d'une feuille en polyéthylène (PE) 25a, 25b. Les parois des alvéoles 240 du nid d'abeille sont également recouvertes d'un revêtement 25 en PE reliant les feuilles 25a, 25b en PE (figure 4A).

Pour réaliser un tel cordon 23, on peut avantageusement réaliser la structure de matrice en nid d'abeille 24 en PU par thermoformage ou moulage à chaud. Puis, on réalise le moulage du revêtement 25 interne en PE sur les parois des alvéoles 240 (figure 5A) et enfin, on réalise le laminage à chaud sur chacune des deux faces principales de la matrice 24, d'une feuille 25a, 25b en PE. Ces feuilles 25a, 25b ainsi que le revêtement interne 25 contribuent à assurer l'étanchéité de la structure de matrice 24 aux différents collecteurs de courant métalliques 10, typiquement en aluminium, de l'empilement d'une batterie bipolaire
(figure 4).

La largeur de chaque cordon d'étanchéité 23 selon l'invention correspond sensiblement à celle de la matrice en nid d'abeille 24 et est avantageusement comprise entre 0,5 et 1 cm.

La hauteur de chaque cordon d'étanchéité 23 selon l'invention correspond sensiblement à celle de la matrice en nid d'abeille 24 plus celles des feuilles 25a, 25b en PE et est avantageusement comprise entre 100 et 200 µm, de préférence égale à 150 µm.

Avec une structure de matrice en nid d'abeille 24, les avantages d'un cordon d'étanchéité 23 selon l'invention sont nombreux, parmi lesquels :
- une bonne tenue mécanique assurant une hauteur de compartiment électrochimique C1, C2 figée correspondant sensiblement à la hauteur de la structure de matrice 24 en nid d'abeille en PU plus celles des feuilles 25a, 25b en PE ;
- une aptitude de la batterie bipolaire selon l'invention à être plus flexible qu'une batterie selon l'état de l'art dans laquelle un joint d'étanchéité présente une structure pleine ;
- une plus grande légèreté des cordons d'étanchéité 23 comparativement aux joints d'étanchéité selon l'état de l'art ;
- une étanchéité garantie de tous les compartiments électrochimiques de la batterie bipolaire, après plusieurs chauffages successifs ;
- une étanchéité accrue comparativement à celles procurées selon l'état de l'art du fait du nombre important d'alvéoles constituant en elles-mêmes de multiples sas d'étanchéité entre chaque compartiment électrochimique et l'environnement extérieur.

Les étapes de réalisation d'une batterie bipolaire intégrant des moyens d'étanchéité selon l'invention avec matrice à nid d'abeille à base de PU ou de PTFE, recouverte ou enduite sur chacune de ses faces d'un matériau de thermoscellage et isolant électrique, sont décrites ci-après en relation avec les figures 6A à 6J. La batterie réalisée comporte deux cellules C1, C2 empilées l'une sur l'autre et comportant chacune une anode, une cathode et un électrolyte. On précise que tous les substrats 10, 13, 21 sont en aluminium, toutes les anodes en Li₄Ti₅O₁₂ et toutes les cathodes en LiFePO₄. Les séparateurs sont tous dans le même matériau tel que le polyfluorure de vinylidène (PVDF). L'électrolyte utilisé est par exemple un mélange de carbonate et un sel de lithium LiPF₆.

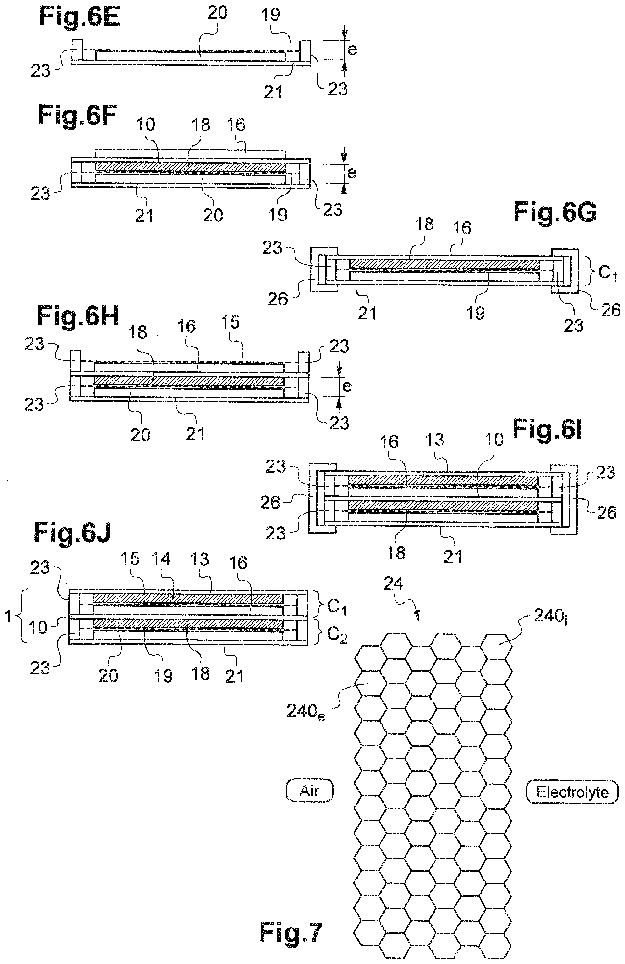

On précise que toutes les étapes 1 à 6 sont réalisées à température ambiante.
Etape 1: on réalise un collecteur de courant bipolaire 1 avec une face recouverte de la cathode 18 de la première cellule C1 et la face opposée recouverte de l'anode 16 de la deuxième cellule C2 (figure 6A).
Etape 2: on réalise un collecteur de courant terminal 21 avec une face recouverte de l'anode 20 de la première cellule C1 (figure 6B).
Etape 3: on réalise un collecteur de courant terminal 13 avec une face recouverte de la cathode 14 de la deuxième cellule C2 (figure 6C).
Etape 4: on réalise un premier cordon 23 comportant une matrice 24 en nid d'abeille à base de PU, à l'intérieur de ses alvéoles du PE et sur chacune de ses faces principales une feuille 25a, 25b en PE, comme celle décrite précédemment en référence aux figures 4A et 4B. On dépose alors le premier cordon 23 avec la matrice en nid d'abeille 24 à plat, à la périphérie de, et en contact direct avec la face du collecteur recouverte de l'anode 20 (figure 6D).
Etape 5 : On intercale un premier séparateur 19 en le posant sur l'anode 20 du premier collecteur de courant terminal 21 et à l'intérieur du premier cordon 23 (figure 6E).
   On empile le collecteur de courant bipolaire 1 sur le premier collecteur terminal 21 en mettant en contact direct d'une part, la cathode 18 avec le premier séparateur 19 et d'autre part, la face libre du premier cordon 23 avec la périphérie du collecteur de courant proprement dit 10 (figure 6F).
Etape 6 : On réalise alors le chauffage du premier cordon 23 à l'aide de mors 24 chauffant en forme de U entourant la cellule électrochimique constituée C2 (figure 6G). Ce chauffage réalise le thermoscellage des feuilles 25a, 25b du premier cordon 23 à l'une des faces du collecteur bipolaire 1 et du collecteur de courant terminal 21.
Etape 7: on réalise la même étape que l'étape 4/ précitée mais avec le collecteur bipolaire 1. Ainsi, on réalise un deuxième cordon 23 comportant une matrice 24 en nid d'abeille à base de PU, à l'intérieur de ses alvéoles du PE et sur chacune de ses faces principales une feuille 25a, 25b en PE, comme celle décrite précédemment en référence aux figures 4A et 4B. On dépose alors le deuxième cordon 23 avec la matrice en nid d'abeille 24 à plat, à la périphérie de, et en contact direct avec la face du collecteur recouverte de l'anode 16 du collecteur bipolaire.
Etape 8: On intercale un deuxième séparateur 15 en le posant sur l'anode 16 du collecteur bipolaire 1 et à l'intérieur du deuxième cordon 23 (figure 6H).
   On empile le deuxième collecteur de courant terminal 13 sur le collecteur bipolaire 1 en mettant en contact direct d'une part, la cathode 14 avec le deuxième séparateur 15 et d'autre part, la face libre du deuxième cordon 23 avec la périphérie du collecteur de courant terminal 13 (figure 6I).
Etape 9: On réalise alors un chauffage à l'aide de mors 24 chauffant en forme de U entourant l'empilement de la batterie bipolaire à deux cellules C1, C2 au niveau de sa périphérie (figure 6J). Ce chauffage réalise le thermoscellage des feuilles 25a, 25b du deuxième cordon 23 à l'une des faces du collecteur bipolaire et du collecteur de courant terminal 13.

L'étanchéité ainsi obtenue par tous les cordons 23 est ainsi parfaite vis-à-vis de l'électrolyte et ce pour toutes les cellules C1, C2 de la batterie bipolaire.

En ce qui concerne les électrolytes, on peut utiliser un électrolyte sous forme polymère ou solidifié à basse température ou sous forme liquide imprégné dans un séparateur. Pour l'activation des électrolytes, on peut procéder par imprégnation de chaque séparateur 15, 19 à l'aide d'un électrolyte sous forme de gel ou solidifié à basse température, avant leur intégration lors du montage. Alternativement, on peut réaliser le montage avec empilement de l'ensemble de la batterie, réaliser le scellement conformément à l'invention puis ménager via un tuyau disposé entre les deux cordons, une entrée pour l'électrolyte liquide pour un remplissage ultérieur.

Afin de renforcer encore l'étanchéité d'une batterie bipolaire réalisée avec les cordons selon l'invention, certaines alvéoles de la structure en nid d'abeille des cordons peuvent être avantageusement remplies de sels ou de composés de type mucilagineux. Ainsi, comme montré en figure 7, on peut remplir avantageusement les alvéoles 240i intérieures d'une matrice 24 de cordon 23 qui sont celles les plus proches des cellules C1, C2, c'est-à-dire en contact avec l'électrolyte lithié des cellules, avec des sels ou composés mucilagineux adaptés pour réagir avec ledit électrolyte. On peut également remplir avantageusement les alvéoles 240e extérieures d'une matrice 24 de cordon 23 qui sont celles les plus proches de l'environnement extérieur c'est-à-dire en contact avec l'air ambiant, avec des sels ou composés mucilagineux adaptés pour réagir avec l'humidité de l'air. En tant que composés mucilagineux, il peut s'agir de polymères superabsorbants, tels que les polyacrylates de sodium.

Au lieu de revêtir par laminage à chaud chaque face principale de la matrice en nid d'abeille 24, on peut alternativement enduire cette dernière d'une résine époxyde ou méthacrylate avant le dépôt sur un collecteur de courant et avant l'étape de thermoscellage proprement dite.

L'invention n'est pas limitée aux exemples qui viennent d'être décrits ; on peut notamment combiner entre elles des caractéristiques des exemples illustrés au sein de variantes non illustrées.

Il va de soi que si l'étanchéité selon l'invention à l'aide de cordons à matrice à nid d'abeille à base de PU ou PE avec feuilles ou couches de revêtement en matériau de thermo scellage, a été décrite en relation avec une batterie bipolaire à deux cellules empilées, elle peut être réalisée de la même manière pour une batterie à un nombre n de cellules empilées en répétant les étapes 1 à 9 précédentes avec un nombre égal à n-2 de collecteurs bipolaires et deux collecteurs de courant terminaux 13, 21.

## Revendications

1. Batterie bipolaire, de type Li-ion, comprenant :
- au moins une première et deuxième cellules électrochimiques (C1, C2) empilées l'une sur l'autre et comportant chacune une anode, une cathode et un électrolyte,
- au moins un collecteur de courant bipolaire (1) dont une face est recouverte de l'anode (16) en matériau d'insertion au lithium de la première cellule (C1) et la face opposée est recouverte de la cathode (18) en matériau d'insertion au lithium de la deuxième cellule (C2), le collecteur bipolaire comportant à sa périphérie, sur chacune de ses faces, au moins un cordon (23) d'un matériau isolant électrique constituant une zone périphérique d'une paroi étanche à l'électrolyte de la première ou deuxième cellules, qui entoure celle-ci,
- au moins un premier collecteur de courant (13) adjacent au collecteur bipolaire dont une face est recouverte de la cathode (14) de la première cellule (C1); le premier collecteur adjacent comportant également à sa périphérie, au moins un cordon (23) d'un matériau isolant électrique constituant également une zone périphérique la paroi étanche à l'électrolyte de la première cellule,
- au moins un deuxième collecteur (21) de courant adjacent au collecteur bipolaire dont une face est recouverte de l'anode (20) de la deuxième cellule (C2); le deuxième collecteur adjacent comportant également à sa périphérie, au moins un cordon (23) d'un matériau isolant électrique constituant également une zone périphérique de la paroi étanche à l'électrolyte de la deuxième cellule,
dans laquelle chaque paroi étanche est constituée d'au moins un cordon (23) constitué d'une matrice (24) en nid d'abeille et recouverte, sur chacune de ses deux faces principales d'une couche ou feuille (25a, 25b) en matériau thermoscellant et isolant électrique, chaque couche ou feuille étant thermoscellée à un des collecteurs de courant, le matériau thermoscellant et isolant électrique remplissant au moins en partie les alvéoles (240) du nid d'abeille en reliant les deux couches ou feuilles (25a, 25b) entre elles.

2. Batterie bipolaire selon la revendication 1, chaque collecteur de courant étant un substrat en aluminium.

3. Batterie bipolaire selon la revendication 1 ou 2, le matériau thermoscellant étant une résine époxyde ou une résine méthacrylate enduite, avant la mise en place sur un collecteur de courant et le thermoscellage, à l'intérieur et sur chacune des deux faces principales de la matrice en nid d'abeille.

4. Batterie bipolaire selon la revendication 1 ou 2, le matériau thermoscellant étant une du polyéthylène moulé à chaud à l'intérieur de la matrice en nid d'abeille (24), et laminé à chaud sous la forme d'une feuille (25a, 25b), avant la mise en place sur un collecteur de courant et le thermoscellage, sur chacune des deux faces principales de la matrice en nid d'abeille.

5. Batterie bipolaire selon l'une des revendications précédentes, l'épaisseur de chaque cordon (23) étant sensiblement égale à l'épaisseur d'une cellule électrochimique.

6. Batterie bipolaire selon l'une des revendications précédentes, l'épaisseur de chaque cordon étant comprise entre 100 et 200 µm, de préférence égale à 150 µm plus ou moins 5 µm.

7. Batterie bipolaire selon l'une des revendications précédentes, la largeur de chaque cordon (23) étant comprise entre 0,1 et 2 cm.

8. Batterie bipolaire selon l'une des revendications précédentes, une partie des alvéoles (240i) de la matrice en nid d'abeille, qui sont les plus proches des cellules électrochimiques, étant remplies de sels ou composés mucilagineux adaptés pour réagir avec l'électrolyte.

9. Batterie bipolaire selon l'une des revendications précédentes, une partie des alvéoles (240e) de la matrice en nid d'abeille, qui sont les plus éloignées des cellules électrochimiques, étant remplies de sels ou composés mucilagineux adaptés pour réagir avec l'humidité de l'air ambiant.

10. Batterie bipolaire selon l'une des revendications précédentes, comprenant un empilement de n cellules électrochimiques, avec un nombre de n-2 collecteurs de courant bipolaires, l'un des collecteurs adjacents étant un collecteur de courant terminal, l'autre des collecteurs adjacents étant l'autre collecteur de courant terminal.

11. Batterie bipolaire selon l'une des revendications précédentes, les anodes sont en Li₄Ti₅O₁₂ et les cathodes en LiFePO₄.

12. Procédé de réalisation d'une batterie bipolaire comprenant au moins une première et deuxième cellules (C1, C2) électrochimiques empilées l'une sur l'autre et comportant chacune une anode, une cathode et un électrolyte,
a/ réalisation d'un collecteur de courant bipolaire (1) avec une face recouverte de l'anode (16) en matériau d'insertion au lithium de la première cellule et la face opposée recouverte de la cathode (18) en matériau d'insertion au lithium de la deuxième cellule ;
b/ réalisation d'un premier collecteur de courant (13), destiné à être adjacent au collecteur bipolaire dont une face est recouverte de la cathode (14) de la première cellule ;
c/ réalisation d'un deuxième collecteur de courant (21), destiné à être adjacent au collecteur bipolaire dont une face est recouverte de l'anode (20) de la deuxième cellule ;
d/ réalisation d'un premier cordon (23) constitué d'une matrice (24) en nid d'abeille, au moins une partie des alvéoles (240) de la matrice étant remplie d'un matériau thermoscellant et isolant électrique qui en outre recouvre chacune de ses deux faces principales sous la forme d'une couche ou feuille (25a, 25b) ;
e/ mise en place du cordon (23) à la périphérie de la face du deuxième collecteur recouverte de l'anode (20);
f/ mise en place d'un premier séparateur (19) sur l'anode (20) du deuxième collecteur à l'intérieur du premier cordon (23) ;
g/ empilement du collecteur de courant bipolaire (1) de telle sorte que l'anode (20) du deuxième collecteur adjacent soit en regard de la cathode (18) du collecteur bipolaire en étant séparés du premier séparateur et que le premier cordon d'étanchéité (23) soit en appui à la fois sur le deuxième collecteur et sur le collecteur bipolaire;
h/ chauffage du premier cordon (23) en contact à la périphérie des collecteurs de sorte à réaliser le thermoscellage de la matrice en nid d'abeille,
les étapes d/ à h/ étant réalisées au moins une fois avec un deuxième cordon d'étanchéité (23), un deuxième séparateur (15) et le premier collecteur de courant (13, 14).

13. Procédé selon la revendication 12, selon lequel le chauffage selon chaque étape f/ est réalisé à l'aide de mors chauffants (24) en forme de U autour des parties périphériques des collecteurs déjà empilés.

14. Procédé selon la revendication 12 ou 13, selon lequel le chauffage selon chaque étape f/ est réalisé à une température inférieure à 200°C, typiquement à environ 80°C.

## Patentansprüche

1. Bipolare Li-Ionenbatterie, mit:
- wenigstens einer ersten und einer zweiten elektrochemischen Zelle (C1, C2), die aufeinander gestapelt sind und jeweils eine Anode, eine Kathode und einen Elektrolyten aufweisen,
- wenigstens einem bipolaren Kollektor (1), dessen eine Seite mit der aus einem Lithium-Einsatzmaterial gebildeten Anode (16) der ersten Zelle (C1) bedeckt ist und dessen entgegengesetzte Seite mit dem aus einem Lithium-Einsatzmaterial gebildeten Kathode (18) der zweiten Zelle (C2) bedeckt ist, wobei der bipolare Kollektor an seinem Umfang auf jeder seiner Seiten wenigstens ein Band (23) aus einem elektrisch isolierenden Material aufweist, das eine Umfangszone einer Wand bildet, die für den Elektrolyten der ersten oder zweiten Zelle dicht ist und diese Zelle umgibt,
- wenigstens einem ersten Stromkollektor (13), der dem bipolaren Kollektor benachbart ist und dessen eine Seite mit der Kathode (14) der ersten Zelle (C1) bedeckt ist, wobei der benachbarte erste Kollektor ebenfalls an seinem Umfang wenigstens ein Band (23) aus einem elektrisch isolierenden Material aufweist, das ebenfalls eine Umfangszone der für den Elektrolyten der ersten Zelle dichten Wand bildet,
- wenigstens einem zweiten Stromkollektor (21), der an dem bipolaren Kollektor benachbart ist und dessen eine Seite mit der Anode (20) der zweiten Zelle (C2) bedeckt ist, wobei der zweite benachbarte Kollektor ebenfalls an seinem Umfang wenigstens ein Band (23) aus einem elektrisch isolierenden Material aufweist, das ebenfalls eine Umfangszone der für den Elektrolyten der zweiten Zelle dichten Wand bildet,
bei der jede dichte Wand durch wenigstens ein Band (23) gebildet wird, das durch eine Matrix (24) mit Waffelmuster gebildet wird und an jeder seiner beiden Hauptflächen mit einer Schicht oder einem Blatt (25a, 25b) aus einem heißsiegelnden und elektrisch isolierenden Material bedeckt ist, wobei jede Schicht oder jedes Blatt durch Heißsiegeln mit einem der Stromkollektoren verbunden ist und das heißsiegelnde und elektrisch isolierende Material wenigstens einen Teil der Zellen (240) des Waffelmusters ausfüllt und die beiden Schichten oder Blätter (25a, 25b) miteinander verbindet.

2. Bipolare Batterie nach Anspruch 1, bei der jeder Stromkollektor ein Substrat aus Aluminium aufweist.

3. Bipolare Batterie nach Anspruch 1 oder 2, bei der das heißsiegelnde Material ein Epoxidharz oder ein Methacrylat-Harz ist, das vor dem Positionieren und Heißsiegeln des Stromkollektors auf das Innere und jede der beiden Hauptflächen der Matrix mit Waffelmuster aufgestrichen ist.

4. Bipolare Batterie nach Anspruch 1 oder 2, bei der das heißsiegelnde Material ein Material aus Polyethylen ist, das heiß in das Innere der Matrix (24) mit Waffelmuster eingeformt und heiß in der Form eines Blattes (25a, 25b) auf jede der beiden Hauptflächen der Matrix mit Waffelmuster auflaminiert wurde, bevor der Stromkollektor positioniert und heißgesiegelt wurde.

5. Bipolare Batterie nach einem der vorstehenden Ansprüche, bei der die Dicke jedes Bandes (23) im wesentlichen gleich der Dicke einer elektrochemischen Zelle ist.

6. Bipolare Batterie nach einem der vorstehenden Ansprüche, bei der die Dicke jedes Bandes zwischen 100 und 200 µm, vorzugsweise 150 µm plus oder minus 5µm beträgt.

7. Bipolare Batterie nach einem der vorstehenden Ansprüche, bei der die Breite jedes Bandes (23) zwischen 0,1 und 2 cm beträgt.

8. Bipolare Batterie nach einem der vorstehenden Ansprüche, bei der ein Teil der Zellen (240i) der Matrix mit Waffelmuster, die den elektrochemischen Zellen am nächsten sind, mit Salzen oder pastösen Verbindungen gefüllt sind, die in der Lage sind, mit den Elektrolyten zu reagieren.

9. Bipolare Batterie nach einem der vorstehenden Ansprüche, bei der ein Teil der Zellen (240e) der Matrix mit Waffelmuster, die am weitesten von den elektrochemischen Zellen entfernt sind, mit Salzen oder pastösen Verbindungen gefüllt sind, die in der Lage sind, mit der Feuchtigkeit der Umgebungsluft zu reagieren.

10. Bipolare Batterie nach einem der vorstehenden Ansprüche, mit einem Stapel aus n chemischen Zellen, einer Anzahl n-2 von bipolaren Stromkollektoren, wobei einer der benachbarten Kollektoren ein endständiger Stromkollektor ist und der andere der benachbarten Kollektoren ein anderer endständiger Stromkollektor ist.

11. Bipolare Batterie nach einem der vorstehenden Ansprüche, bei der die Anoden aus Li₄Ti₅O₁₂ und die Kathoden aus LiFePO₄ gebildet sind.

12. Verfahren zur Herstellung einer bipolaren Batterie mit mindestens einer ersten und einer zweiten elektrochemischen Zelle (C1, C2), die aufeinander gestapelt sind und jeweils eine Anode, eine Kathode und einen Elektrolyten aufweisen,
a/ Herstellen eines bipolaren Stromkollektors (1) mit einer Seite, die mit der aus Lithium-Einsatzmaterial gebildeten Anode (16) der ersten Zelle bedeckt ist und dessen entgegengesetzte Seite mit der aus Lithium-Einsatzmaterial gebildeten Kathode (18) der zweiten Zelle bedeckt ist,
b/ Herstellen eines ersten Stromkollektors (13), der dazu bestimmt ist, an den bipolaren Kollektor anzugrenzen, dessen eine Seite mit der Kathode (14) der ersten Zelle bedeckt ist,
c/ Herstellen eines zweiten Stromkollektors (21), der dazu bestimmt ist, an den bipolaren Kollektor anzugrenzen, dessen eine Seite mit der Anode (20) der zweiten Zelle bedeckt ist,
d/ Herstellen eines ersten Bandes (23), das aus einer Matrix (24) mit Waffelmuster gebildet ist, wobei mindestens ein Teil der Zellen (240) der Matrix mit einem heißsiegelnden und elektrisch isolierenden Material gefüllt ist, das außerdem jede der beiden Hauptflächen in der Form einer Schicht oder eines Blattes (25a, 25b) bedeckt,
e/ Anbringen des Bandes (23) am Umfang der Seite des zweiten Kollektors, der mit der Anode (20) bedeckt ist,
f/ Anbringen eines ersten Trennelements (19) auf der Anode (20) des zweiten Kollektors innerhalb des ersten Bandes (23),
g/ Stapeln des bipolaren Stromkollektors (1) derart, dass die Anode (20) des angrenzenden zweiten Kollektors der Kathode (18) des bipolaren Kollektors gegenüberliegt und von dieser durch das erste Trennelement getrennt ist und das erste Dichtungsband (23) sowohl an dem zweiten Kollektor als auch an dem bipolaren Kollektor anliegt,
h/ Erhitzen des ersten Bandes (23) in Kontakt mit dem Umfang der Kollektoren, derart, dass eine Heißsiegelung der Matrix mit Waffelmuster bewirkt wird,
wobei die Schritte d/ bis h/ mindestens einmal mit einem zweiten Dichtungsband (23), einem zweiten Trennelement (15) und dem ersten Stromkollektor (13, 14) ausgeführt werden.

13. Verfahren nach Anspruch 12, bei dem das Erhitzen in Schritt f/ mit Hilfe von U-förmigen Heizbacken (24) erfolgt, die die Umfangsbereiche der bereits gestapelten Kollektoren umgeben.

14. Verfahren nach Anspruch 12 oder 13, bei dem das Erhitzen in Schritt f/ bei einer Temperatur von weniger als 200 °C, typischerweise bei etwa 80 °C erfolgt.

## Claims

1. A bipolar Li-ion battery, including:
- at least a first and second electrochemical cells (C1, C2) stacked one on top of the other and each comprising an anode, a cathode and an electrolyte,
- at least one bipolar current collector (1) one face of which is covered by the anode (16) made of lithium insertion material of the first cell (C I) and the opposite face is covered by the cathode (18) made of lithium insertion material of the second cell (C2), the bipolar collector comprising at the periphery thereof, on each of the faces thereof, at least one bead (23) of an electrically insulating material forming a peripheral zone of a wall impermeable to the electrolyte of the first or second cells, surrounding same,
- at least one first current collector (13) adjacent to the bipolar collector one face of which is covered by the cathode (14) of the first cell (C1); the first adjacent collector also comprising at the periphery thereof, at least one bead (23) of an electrically insulating material also forming a peripheral zone of the wall impermeable to the electrolyte of the first cell,
- at least one second current collector (21) adjacent to the bipolar collector one face of which is covered by the anode (20) of the second cell (C2); the second adjacent collector also comprising at the periphery thereof, at least one bead (23) of an electrically insulating material also forming a peripheral zone of the wall impermeable to the electrolyte of the second cell,
in which each impermeable wall consists of at least one bead (23) formed from a honeycomb matrix (24) covered, on each of its two main faces, with a layer or sheet (25a, 25b) made of a heat-sealing and electrically insulating material, each layer or sheet being heat sealed to one of the current collectors, the heat-sealing and electrically insulating material at least partially filling the alveoli (240) of the honeycomb in such a way that the two layers or sheets (25a, 25b) join together.

2. The bipolar battery as claimed in claim 1, each current collector being a substrate made of aluminum.

3. The bipolar battery as claimed in claim 1 or 2, the heat-sealing material being an epoxide resin or a methacrylate resin coated, before the installation on a current collector and the heat sealing, on the interior and on each of the two main faces of the honeycomb matrix.

4. The bipolar battery as claimed in claim 1 or 2, the heat-sealing material being one of polyethylene hot-molded in the interior of the honeycomb matrix (24) and hot-rolled in the form of a sheet (25a, 25b), before the installation on a current collector and the heat sealing, on each of the two main faces of the honeycomb matrix.

5. The bipolar battery as claimed in one of the preceding claims, the thickness of each bead (23) being substantially equal to the thickness of an electrochemical cell.

6. The bipolar battery as claimed in one of the preceding claims, the thickness of each bead being between 100 and 200 µm, preferably equal to 150 µm plus or minus 5 µm.

7. The bipolar battery as claimed in one of the preceding claims, the width of each bead (23) being between 0.1 and 2 cm.

8. The bipolar battery as claimed in one of the preceding claims, some of the alveoli (240i) of the honeycomb matrix, which are closest to the electrochemical cells, being filled with salts or mucilaginous compounds apt to react with the electrolyte.

9. The bipolar battery as claimed in one of the preceding claims, some of the alveoli (240e) of the honeycomb matrix, which are furthest from the electrochemical cells, being filled with salts or mucilaginous compounds apt to react with moisture in the ambient air.

10. The bipolar battery as claimed in one of the preceding claims, including a stack of n electrochemical cells, with a number of n-2 bipolar current collectors, one of the adjacent collectors being a terminal current collector, the other of the adjacent collectors being the other terminal current collector.

11. The bipolar battery as claimed in one of the preceding claims, the anodes are made of Li₄Ti₅O₁₂ and the cathodes of LiFePO₄.

12. A bipolar battery production process including least a first and second electrochemical cells (C1, C2) stacked one on top of the other and each comprising an anode, a cathode and an electrolyte,
a/ producing a bipolar current collector (1) with one face covered by the anode (16) made of lithium insertion material of the first cell and the opposite face covered by the cathode (18) made of lithium insertion material of the second cell;
b/ producing a first current collector (13), intended to be adjacent to the bipolar collector one face of which is covered by the cathode (14) of the first cell;
c/ producing a second current collector (21), intended to be adjacent to the bipolar collector one face of which is covered by the anode (20) of the second cell;
d/ producing a first bead (23) formed from a honeycomb matrix (24), at least some of the alveoli (240) of the matrix being filled with a heat-sealing and electrically insulating material that furthermore covers each of its two main faces taking the form of a layer or sheet (25a, 25b);
e/ installing the bead (23) on the periphery of that face of the second collector which is covered with the anode (20);
f/ installing a first separator (19) on the anode (20) of the second collector in the interior of the first bead (23);
g/ stacking the bipolar current collector (1) such that the anode (20) of the adjacent second collector is facing the cathode (18) of the bipolar collector while being separated from the first separator, and such that the first sealing bead (23) bears against both the second collector and the bipolar collector; and
h/ heating the first bead (23) making contact with the periphery of the collectors so as to heat seal the honeycomb matrix,
steps d/ to h/ being carried out at least once with a second sealing bead (23), a second separator (15) and the first current collector (13, 14).

13. A process as claimed in claim 12, in which the heating in each step f/ is carried out using U-shaped heating jaws (24) placed about peripheral portions of the previously stacked collectors.

14. The process as claimed in claim 12 or 13, in which the heating in each step f/ is carried out at a temperature below 200°C and typically at about 80°C.
